# EUROPÄISCHE PATENTSCHRIFT

(11) **EP 3 913 786 B1**
(45) Veröffentlichungstag und Bekanntmachung des Hinweises auf die Patenterteilung: **12.11.2025**
(21) Anmeldenummer: 20175137.7
(22) Anmeldetag: 18.05.2020
(51) Int. Cl.: H02M 7/483, H02M 1/36, H02M 7/757, H02M 5/293, H02M 7/521

(54) **STROMRICHTERANORDNUNG MIT EINEM NETZGEFÜHRTEN STROMRICHTER SOWIE VERFAHREN ZUM ANFAHREN DER STROMRICHTERANORDNUNG**
CONVERTER ASSEMBLY WITH A LINE-COMMUTATED CONVERTER AND METHOD FOR STARTING THE CONVERTER ASSEMBLY
DISPOSITIF DE CONVERSION AVEC UN CONVERTISSEUR COMMUTÉ PAR LA LIGNE AINSI QUE PROCÉDÉ DE DÉMARRAGE DU CONVERTISSEUR

(43) Veröffentlichungstag der Anmeldung: 24.11.2021
(73) Patentinhaber: Siemens Energy Global GmbH & Co. KG, 81739 München (DE)
(72) Erfinder: Hammer, Stefan, 91058 Erlangen (DE); Hussennether, Volker, 90482 Nürnberg (DE); Halfmann, Ulrich, 91094 Langensendelbach (DE); Siegert, Sascha, 90592 Schwarzenbruck (DE)

(56) Entgegenhaltungen:
- EP-A1- 3 439 158
- EP-A1- 3 614 553
- EP-A2- 3 518 366
- WO-A1-2019/166082
- WO-A1-2020/043304
- DE-A1- 102013 214 693
- VISSER A J ET AL: "Direct-coupled cascaded multilevel sag compensator", POWER ELECTRONICS SPECIALISTS CONFERENCE, 2000. PESC 00. 2000 IEEE 31S T ANNUAL 18-23 JUNE 2000, PISCATAWAY, NJ, USA,IEEE, vol. 1, 18 June 2000 (2000-06-18), pages 463 - 469, XP010517279, ISBN: 978-0-7803-5692-4
- BAKAS PANAGIOTIS ET AL: "Hybrid topologies for series and shunt compensation of the line-commutated converter", 2016 IEEE 8TH INTERNATIONAL POWER ELECTRONICS AND MOTION CONTROL CONFERENCE (IPEMC-ECCE ASIA), IEEE, 22 May 2016 (2016-05-22), pages 3030 - 3035, XP032924766, DOI: 10.1109/IPEMC.2016.7512779
- "Performance of unified power flow controller (UPFC) in electric power systems", 13 September 2019 (2019-09-13), pages 1 - 40, XP082018625, Retrieved from the Internet <URL:ftp://standard.iec.ch/iectr63262{ed1.0}en.pdf> [retrieved on 20190913]
- A. LESNICAR ET AL: "An innovative modular multilevel converter topology suitable for a wide power range", 2003 IEEE BOLOGNA POWER TECH CONFERENCE PROCEEDINGS,, vol. 3, 1 January 2003 (2003-01-01), pages 272 - 277, XP055079911, ISBN: 978-0-78-037967-1, DOI: 10.1109/PTC.2003.1304403
- HIROFUMI AKAGI: "New Trends in Active Filters for Power Conditioning", IEEE TRANSACTIONS ON INDUSTRY APPLICATIONS, IEEE SERVICE CENTER, PISCATAWAY, NJ, US, vol. 32, no. 6, 1 December 1996 (1996-12-01), XP011022091, ISSN: 0093-9994

## Beschreibung

Die Erfindung betrifft eine Stromrichteranordnung, die einen netzgeführten Stromrichter umfasst, der einen Wechselspannungsanschluss aufweist, der über wenigstens eine Phasenleitung mit einem Wechselspannungsnetz verbindbar ist, wobei die Stromrichteranordnung ferner wenigstens einen Schaltmodulzweig umfasst, der seriell in der wenigstens einen Phasenleitung angeordnet ist, und der eine Reihenschaltung von Schaltmodulen umfasst, an deren Anschlüssen jeweils bipolare Spannungen erzeugbar sind, die sich zu einer Zweigspannung summieren.

Netzgeführte Stromrichter sind aus dem Stand der Technik bekannt. Sie zeichnen sich insbesondere dadurch aus, dass ein Umschalten der Stromrichterventile (auch als Kommutierung bezeichnet) durch das angeschlossene Wechselspannungsnetz bewirkt wird. Die in dem netzgeführten Stromrichter verwendeten Halbleiterschalter sind oft entweder passive Elemente, wie Dioden, oder ein- aber nicht aktiv abschaltbare Halbleiterschalter, wie beispielsweise Thyristoren. Der Vorteil netzgeführter Stromrichter liegt vor allem in deren Robustheit, Zuverlässigkeit, relativer Einfachheit in der Handhabung und Steuerung sowie der Möglichkeit, netzgeführte Stromrichter für besonders hohe Spannungen auszulegen.

Netzgeführte Stromrichter werden in manchen Anwendungen im Zusammenhang mit einem schwachen bzw. instabilen Wechselspannungsnetz eingesetzt. In solchen Anwendungen kann der Fall eintreten, dass aufgrund transienter Vorgänge eine durch das Wechselspannungsnetz bereitgestellte Wechselspannung (bzw. Spannungszeitfläche) geringer ist als diejenige, die zur Kommutierung des Stromrichters benötigt wird. Solche transienten Vorgänge können beispielsweise das Schalten eines Wechselspannungsfilters oder eine Änderung der dem Wechselspannungsnetz entnommenen elektrischen Leistung (sogenannter Spannungseinbruch) sein. Dies kann zu Kommutierungsfehlern und zu anderen Störungen beim Betrieb oder gar zu einer Betriebsunterbrechung führen. Eine weitere Herausforderung im Zusammenhang mit netzgeführten Stromrichtern ist deren hoher Blindleistungsbedarf. Es wird allgemein eine Grundschwingungsblindleistungs-Kompensation von etwa halber Wirkleistung benötig. Dies erhöht nachteilig auch die Gesamtanlagenfläche.

Um die Spannungsstabilität bei schwachen Netzen zu verbessern, ist es möglich, den netzgeführten Stromrichter mit einer Shunt-Kompensation zu kombinieren. Bei sehr schwachen AC Netzen kommt zusätzlich der Einsatz eines rotierenden Phasenschiebers infrage.

Aus dem Beitrag von Bakas et al. "Hybrid Topologies for Series and Shunt Compensation of the Line-Commutated Converter", IEEE 2016, ist eine Anordnung mit einem netzgeführten Stromrichter und einer regelbaren Serien-Kapazität bekannt. Die Serien-Kapazität wird dabei durch seriell in eine Phasenleitung eingebundene Vollbrücken-Schaltmodule realisiert. Bei der bekannten Anordnung ist insbesondere eine "passive" Nutzung der Vollbrücken-Schaltmodule vorgesehen, bei welchem diese nur zum Einbringen einer grundfrequenten Spannung dienen. Vollbrücken-Schaltmodule zeichnen sich insbesondere dadurch aus, dass an deren Anschlüssen eine bipolare Spannung erzeugbar ist, d.h. sowohl eine positive als auch eine negative Schaltmodulspannung. Der Betrag der Schaltmodulspannung entspricht im Wesentlichen einer an einem Energiespeicher des Vollbrücken-Schaltmoduls anstehenden Energiespeicherspannung. Mittels der regelbaren Serien-Kapazität kann vorteilhaft eine Netzimpedanz zwischen dem Stromrichter und dem Anbindungspunkt kompensiert werden.

In der WO 2019/166082 A1 ist eine Vorrichtung zur Lastflusssteuerung in einem Wechselspannungsnetz offenbart.

Weitere Vorrichtungen zur Lastflusssteuerung sind ferner aus der EP 3 518 366 A2 sowie aus dem Beitrag von Visser et al., "Direct-coupled cascaded multilevel sag compensator", POWER ELECTRONICS SPECIALISTS CONFERENCE, 2000, bekannt.

Die WO 2020/043304 A1 offenbart eine Anordnung mit einem thyristorbasierten netzgeführten mehrphasigen Stromrichter und einem wechselspannungsseitig des Stromrichters angeordneten Schaltmodulzweig.

Die Aufgabe der Erfindung ist es, eine artgemäße Stromrichteranordnung vorzuschlagen, die möglichst effizient und zuverlässig ist.

Die Aufgabe wird durch eine Stromrichteranordnung mit den Merkmalen des Patentanspruchs 1 gelöst. Erfindungsgemäß ist in einer Parallelschaltung zum Schaltmodulzweig ein Überbrückungszweig angeordnet, in dem wenigstens eine Schaltvorrichtung angeordnet ist, wobei die Schaltvorrichtung antiparallel geschaltete einschaltbare Halbleiterschalter umfasst. Die einschaltbaren Halbleiterschalter sind insbesondere steuerbar, d.h. beispielsweise mittels einer geeigneten Steuerungseinrichtung einschaltbar, sie können also aktiv durch eine Maßnahme am jeweiligen Halbleiterschalter in einen leitenden Zustand überführt werden. Die Halbleiterschalter sind antiparallel geschaltet, wenn bei Vorhandensein einer ausgeprägten Durchlass- bzw. Sperrrichtung diese in dem jeweiligen Halbleiterschalter-Paar gegenübereinander entgegengesetzt gerichtet sind.

Ein Vorteil der Erfindung besteht darin, dass sich durch die Schutzhalbleiter der Schaltvorrichtung die Schaltmodule für einen geringeren Spannungsbereich bemessen lassen, der üblicherweise durch einen stationären Betrieb vorgegeben ist. Damit kann eine Überdimensionierung der Schaltmodule zum Erreichen einer ausreichend hohen Gegenspannung in Fehlerfällen vermieden werden. Dies ist sowohl bezüglich Effektivität als auch bezüglich der Kosten erforderlich, da eine große Reihenschaltzahl, also die Anzahl der verwendeten Schaltmodule in einem Schaltmodulzweig, sowohl hohe Übertragungsverluste als auch hohe Investitionen bedeutet.

Ein weiterer Vorteil der Erfindung besteht darin, dass die Schaltvorrichtung zur kontrollierten Vorladung der Energiespeicher der Schaltmodule eingesetzt werden kann. Die Inbetriebnahme der Schaltmodule setzt nämlich die Aufladung der Energiespeicher voraus. Mittels der Schaltvorrichtung im Überbrückungszweig können die Energiespeicher aus dem Wechselspannungsnetz geladen werden. Auf diese Weise kann auf eine Bereitstellung separater Vorladeeinrichtungen verzichtet werden.

Mit Hilfe der Schaltvorrichtung im Überbrückungszweig ist es möglich, ohne eine Unterbrechung des Laststromes den Schaltmodulzweig zu überbrücken. Heraus ergeben sich Vorteile für den Betrieb der Stromrichteranordnung, z.B. zur Durchführung von Wartungsarbeiten unabhängig von der Hauptübertragung und einer flexiblen Zu- und Abschaltung der Anordnung je nach weiteren betrieblichen Erfordernissen.

Geeigneterweise werden für den Überbrückungszweig Halbleiterschalter verwendet, die eine höhere Stromtragfähigkeit aufweisen als die Stromtragfähigkeit der ggf. in den Schaltmodulen verwendeten abschaltbaren Halbleiterschalter (beispielsweise Transistoren, wie IGBT oder dergleichen). Hohe auftretende Kurzschlussströme können mit einer schnellen Stromkommutierung auf den Überbrückungszweig beherrscht werden.

Aus der Differenz der gemessenen Spannungen an den beiden äußeren Anschlüssen des Schaltmodulzweiges bzw. der Schaltmodulzweige (diese Spannungen können mit U1 und U2 gekennzeichnet werden) lässt sich indirekt der Ladezustand der Energiespeicher der Schaltmodule überwachen. Bei Vorladung der Schaltmodule ist dies vorteilhaft, weil sich der Spannungsaufbau der Energiespeicher (üblicherweise Kondensatoren) direkt über die als Differenz zwischen U1 und U2 gemessene Summenspannung (Zweigspannung) ergibt. Diese Methode ist genauer als die auf einer Messung der (relativ kleinen) Ströme durch den Schaltmodulzweig basierende. Zur Koordination im Fall von Überspannungen kann die Differenz U1-U2 als Eingangswert genutzt werden. Im stationären Betrieb ergibt sich die Möglichkeit, die gemessenen Spannungen U1 und U2 als Eingangsgröße für die Regelung des Betriebspunktes der Schaltmodulzweige verwenden.

Falls der Stromrichter mit einem drei- oder mehrphasigen Wechselspannungsnetz verbunden ist, kann es von Vorteil sein, wenn für jede der Netzphasen je eine Anordnung der parallelen Zweige mit dem Schaltmodulzweig und dem Überbrückungszweig bereitgestellt ist. Entsprechend weist der Stromrichter einen n-phasigen Wechselspannungsanschluss auf, der über n Phasenleitungen mit dem Wechselspannungsnetz verbindbar ist, wobei in jeder Phasenleitung seriell ein Schaltmodulzweig angeordnet ist, wobei in jedem Schaltmodulzweig eine Reihenschaltung der Schaltmodule angeordnet ist und parallel zu jedem der Schaltmodulzweige jeweils ein Überbrückungszweig mit je einer Schaltvorrichtung mit antiparallelen einschaltbaren Halbleiterschaltern angeordnet ist.

Vorzugsweise sind die Schaltmodule Vollbrückenschaltmodule. Aus dem Stand der Technik sind ferner auch andere je nach Anwendungsfall geeignete bipolare Schaltmodule bekannt, insbesondere solche, an deren Anschlüssen mehr als eine positive und/oder mehr als eine negative Spannung erzeugbar sind.

Eine besonders zuverlässige Variante der Erfindung ergibt sich, wenn der netzgeführte Stromrichter ein thyristorbasierter Stromrichter ist. Der thyristorbasierte Stromrichter kann (bsp. in 6-pulsiger Konfiguration) eine dreiphasige Brückenschaltung mit sechs Phasenzweigen aufweisen. Jeder Phasenzweig erstreckt sich dabei zwischen einem der Gleichspannungspole des Stromrichters und einem der Wechselspannungsanschlüsse. In jedem Phasenzweig ist eine Reihenschaltung von Thyristoren angeordnet. Die Anzahl der Thyristoren in einem Phasenzweig ist durch die gewünschte Auslegung des Stromrichters bestimmt. Insbesondere kann die Stromrichteranordnung, unabhängig von der Wahl der Leistungshalbleiterschalter des Stromrichters, auf eine Spannung von mehr als 100 kV, bevorzugt mehr als 500 kV ausgelegt sein. Bei Anwendungen netzgeführter Umrichter im Bereich HGÜ werden bevorzugt zwei auf der DC Seite in Serie geschaltete 6-pulsige Umrichter in insgesamt 12-pulsiger Konfiguration betrieben. Die im Folgenden für einen 6-pulsigen Umrichter beschriebenen Eigenschaften sind stets analog auch auf einen 12-pulsigen Umrichter übertragbar.

Gemäß einer Ausführungsform der Erfindung ist in einer Parallelschaltung zum Schaltmodulzweig und zum Überbrückungszweig ein mechanischer Bypassschalter angeordnet.

Gemäß einer Ausführungsform der Erfindung ist im Schaltmodulzweig eine erste Induktivität angeordnet. Die erste Induktivität begrenzt vorteilhaft einen Stromanstieg in den Fehlerfällen auf die für den Schutz der Schaltmodule zulässige Anstiegsrate/Steilheit. Eine obere Grenze der Anstiegsrate ist durch eine vom Schutzsystem benötigte Zeitdauer bis zur Kommutierung des Fehlerstromes in den Überbrückungszweig definiert.

Gemäß einer weiteren Ausführungsform der Erfindung ist im Überbrückungszweig eine zweite Induktivität angeordnet. Die zweite Induktivität begrenzt zusammen mit der ersten Induktivität einen Stromanstieg eines Kommutierungsvorgangs zwischen dem Schaltmodulzweig und dem Überbrückungszweig auf die für die Halbleiter der Schaltvorrichtung zulässigen Höchstwerte. Da die erste Induktivität sowohl dem Anstieg des Fehlerstromes als auch einem Stromanstieg während der Kommutierung auf den Überbrückungszweig entgegen, kann diese zur Optimierung bei der Bestimmung der ersten und der zweiten Induktivität genutzt werden. Die erste und/oder die zweite Induktivität können beispielsweise als wenigstens eine geeignete Drossel realisiert werden.

Geeigneterweise gilt für die Anzahl Ah der antiparallelen Halbleiterschalter im Überbrückungszweig, dass Ah <= As <= 3 * Ah, wobei As die Anzahl der Schaltmodule im zugeordneten Schaltmodulzweig bezeichnet. Mit dieser Anzahl wird einerseits eine Überdimensionierung vermieden und ist anderseits ein zuverlässiger Schutz bereitgestellt.

Zweckmäßigerweise umfasst die Stromrichteranordnung eine zentrale Ansteuereinheit, die dazu eingerichtet ist, bei Vorliegen einer vorbestimmten Bedingung die Halbleiterschalter im Überbrückungszweig einzuschalten. Der Überbrückungsschutz des Schaltmodulzweiges bzw. der Schaltmodule ist damit durch eine definierte Spannungsschwelle vorgegeben. Beim Erreichen der Spannungsschwelle werden die Halbleiter der Schaltvorrichtung mittels der zentralen Ansteuereinheit gezündet und zweckmäßigerweise gleichzeitig die Schaltmodule gesperrt/blockiert.

Gemäß einer Ausführungsform der Erfindung sind die Halbleiterschalter im Überbrückungszweig zu einem automatischen bzw. selbsttätigen Einschalten, d.h. ohne Kommunikation mit einer zentralen Ansteuereinheit, bei Vorliegen einer vorbestimmten Bedingung eingerichtet. Die Wahl der Reihenschaltzahl der antiparallelen Halbleiterschalter im Überbrückungszweig im Verhältnis zu der Anzahl der Schaltmodule im Schaltmodulzweig kann derart abgestimmt sein, dass eine in die Schaltvorrichtung integrierte automatische Zündeinheit beim Erreichen einer maximal zulässigen anliegenden Schaltmodulspannung das Einschalten der Halbleiterschalter der Schaltvorrichtung auslöst bzw. bewirkt. Vorteil dieser Variante ist, dass die integrierte Zündung der Halbleiterschalter den Schutz der Schaltmodule auch ohne eine zentrale Ansteuereinheit gewährleistet. Mögliches Kriterium für die Auslegung ist, dass die maximale zulässige Summenspannung (Zweigspannung) zum Erreichen einer BOD-Schwelle ("Break Over Diode"-Schwelle) der Halbleiterschalter im Überbrückungszweig führt.

Vorzugsweise umfasst die Stromrichteranordnung ferner einen steuerbaren Transformator, der zwischen dem wenigstens einen Schaltmodulzweig und dem Stromrichter angeordnet ist. Ein steuerbarer Transformator ist im Rahmen der Erfindung insbesondere ein Transformator mit steuerbarem Übersetzungsverhältnis. Mittels des steuerbaren Transformators kann vorteilhaft eine Spannungsamplitudenänderung (insbesondere eine Erhöhung) ausgeglichen werden, die sich durch die zusätzliche serielle am Schaltmodulzweig gestellte Spannung ergibt. Auf diese Weise kann eine zusätzliche Spannungsbelastung des Stromrichters bzw. dessen Ventile (beispielsweise Thyristorventile) verhindert werden. Zudem kann vorteilhaft ein Stromrichterbetriebspunkt (DC-Spannung, DC-STROM, Zündwinkel, Überlappwinkel) unabhängig von dem Betrieb der Schaltmodule bleiben. Durch die Verwendung des steuerbaren Transformators ist außerdem eine Erweiterung bestehender netzgeführter Stromrichter um dem Schaltmodulzweig ("upgrade") ermöglicht.

Die Erfindung betrifft ferner ein Verfahren zum Starten bzw. zum Anfahren einer erfindungsgemäßen Stromrichteranordnung. Ein Anfahren bzw. Start der Stromrichteranordnung wird üblicherweise nach einer Unterbrechung des Betriebes der Stromrichteranordnung durchgeführt, die z.B. aus einem internen oder externen Fehler resultiert.

Die Aufgabe der Erfindung ist es, ein solches Verfahren anzugeben, das eine möglichst zuverlässigen Start der Stromrichteranordnung ermöglicht.

Die Aufgabe wird erfindungsgemäß bei einem artgemäßen Verfahren dadurch gelöst, dass die Schaltmodule im Schaltzweig gesperrt werden, die Halbleiterschalter im Überbrückungszweig mit einer vorbestimmten Verzögerung eingeschaltet werden, und durch verzögertes Einschalten der Halbleiterschalter der Zweigstrom vom Schaltzweig auf den Überbrückungszweig kommutiert wird.

Geeigneterweise werden die Halbleiterschalter im Überbrückungszweig nach dem Stromnulldurchgang zu definierten Zeitpunkten eingeschaltet, wobei die definierten Zeitpunkte durch eine Verzögerungszeit zwischen Stromnulldurchgang und Einschalten der Halbleiterschalter charakterisiert sind; Die Verzögerungszeit wird erfindungsgemäß in Abhängigkeit der Stromhöhe gewählt, wobei die Verzögerungszeit umso kleiner gewählt wird, je höher der Strom ist (dabei kann die Verzögerungszeit auch null sein), ein Zweigstrom von dem Überbrückungszweig auf den Schaltzweig durch Ansteuern der Halbleiterschalter kommutiert wird; durch verzögertes Einschalten der Halbleiterschalter nach dem Stromnulldurchgang des Zweigstroms kommutiert der Zweigstrom vom Schaltzweig auf den Überbrückungszweig.

Erfindungsgemäß werden dabei die Schaltmodule in Abhängigkeit von einer Schaltmodulspannung und einer Stromrichtung des Zweigstromes (selbstständig) geschaltet, so dass die Energiespeicher der Schaltmodule bis zu einem vorgegebenen Spannungsniveau geladen werden. Insbesondere können damit die Halbleiterschalter im Überbrückungszweig zu einer Vorladung der Energiespeicher eingesetzt werden. Das Verfahren ermöglicht vorteilhaft einen Start der Stromrichteranordnung bzw. des Schaltmodulzweiges auch dann, wenn die Stromrichteranordnung bereits in Betrieb ist, also Laststrom in üblicher Betriebshöhe fließt.

Bevorzugt wird mit dem Einschalten der Halbleiterschalter im Überbrückungszweig ein in Parallelschaltung zum Überbrückungszweig angeordneter mechanischer Bypassschalter geöffnet, also für den Stromfluss gesperrt, so dass der Zweigstrom auf den Überbrückungszweig kommutiert wird.

Eine bevorzugte Variante des Verfahrens kann wie folgt beschrieben werden. In einem ersten Verfahrensschritt wird der Schaltmodulzweig mittels des mechanischen Bypassschalters überbrückt, so dass der Laststrom über den mechanischen Bypassschalter fließt. In einem zweiten Verfahrensschritt wird die schnelle Überbrückung mittels der Schaltvorrichtung im Überbrückungszweig (z.B. der antiparallelen Thyristoren) mittels eines oder mehrerer geeigneter Einschaltsignale eingeschaltet. In einem dritten Verfahrensschritt wird der mechanische Bypassschalter geöffnet; der Laststrom kommutiert auf den Überbrückungszweig; die Schaltmodule sind dabei blockiert und ihre Energiespeicher sind entladen. In einem vierten Verfahrensschritt werden die Einschaltsignale an die einschaltbaren Halbleiterschalter ausgesetzt, so dass diese bei einem Stromnulldurchgang ausgeschaltet werden bzw. sperren; der Laststrom kommutiert auf den Schaltmodulzweig und lädt die Energiespeicher (bsp. Kondensatoren); die Zeitdauer des Ladevorgangs bestimmt sich aus der Höhe des Laststromes sowie der Kapazität und der gewünschten Zielspannung, bis zu der die Energiespeicher geladen werden sollen. Nach einer vorbestimmten Zeit werden die Halbleiterschalter im Überbrückungszweig wieder eingeschaltet und der Strom kommutiert wieder auf den Überbrückungszweig; der Ladevorgang wird für die blockierten Schaltmodule unterbrochen. Sollten sich die Schaltmodule zweckmäßigerweise nach einer definierten Zeit nicht bei einer zentralen Ansteuereinheit melden, so kann davon ausgegangen werden, dass die Vorladung nicht ausreichend erfolgte; in einem solchen Fall können die vorgenannten Verfahrensschritte wiederholt werden. Dabei kann Blockierzeit der Halbleiterschalter im Überbrückungszweig mit jeder Wiederholung reduziert werden, zum Beispiel auf die Hälfe. Geeigneterweise nach einem Erreichen einer ausreichend hohen Energiespeicherspannung und/oder Rückmeldung einer ausreichenden Anzahl von Schaltmodulen erfolgt der Übergang zu einem getakteten Betrieb der Schaltmodule, bei dem mittels Schalten der Halbleiterschalter der Schaltmodule bipolare Spannungen oder ein ausgeschalteter Zustand erzeugt werden. Der Ablauf des getakteten Betriebs kann wie folgt erfolgen. Bei eingeschalteten Halbleierschaltern im Überbrückungszweig werden alle Schaltmodule in den ausgeschalteten Zustand überführt. Die Halbleiterschalter im Überbrückungszweig werden in den sperrenden Zustand überführt (bei Ausbleiben von Einschaltimpulsen sperren die Halbleiterschalter bei Stromnulldurchgang). Durch Schalten einzelner Schaltmodule (bzw. deren Halbleiterschalter) in die Zustände "positive Ausgangsspannung" bzw. "negative Ausgangsspannung" erreichen die Energiespeicher einen für den Normalbetrieb erforderlichen Spannungsbereich. Nachdem eine ausreichende Anzahl von Schaltmodulen für den Normalbetrieb zur Verfügung steht, erfolgt der Übergang zum Normalbetrieb und die eigentliche Funktion der Schaltmodule wird ausgeführt.

Eine andere Ausführungsform der Vorladung besteht darin, anstelle des vierten Verfahrensschrittes die Halbleiterschalter im Überbrückungszweig im Phasenanschnitt anzusteuern, d.h. es wird der Zündverzögerungswinkel der einschaltbaren Halbleiterschalter (z.B. Thyristoren) derart genutzt, dass nur ein (kleiner) Teil der Stromhalbschwingungen auf die Schaltmodule kommutiert wird und die Energiespeicher der Schaltmodule geladen werden. Diese Variante ist insbesondere bei großen Ladeströmen vorteilhaft. Dazu werden kleine Zündverzögerungswinkel genutzt, so dass der Strom vom Stromnulldurchgang an zunächst durch die Schaltmodule fließt und mit dem nur wenige Grad verzögerten Einschalten auf die Schaltmodule kommutiert. Damit wird das Laden der Schaltmodule mit einem definierten Ladestrom erreicht. Der Stromeffektivwert kann durch den Zündverzögerungswinkel geregelt werden. Sofern das Betriebskonzept der Last es erlaubt, kann der Laststrom klein gehalten werden, beispielsweise indem die Halbleiterschalter im Überbrückungszweig im Leerlauf am Netz sind und so lediglich der Leerlaufstrom fließt. Die geringste Last wird beispielsweise durch einen Thyristorstromrichter mit der angeschlossenen HGÜ bestimmt, zu der neben den HGÜ-Stromrichtertransformator im Leerlauf auch Ladeströme der Beschaltung der blockierten Thyristorventile beitragen.

Die Erfindung wird nachfolgend anhand der Ausführungsbeispiele der Figuren 1 bis 4 weiter erläutert.
Figur 1 zeigt ein Ausführungsbeispiels einer erfindungsgemäßen Stromrichteranordnung in einer schematischen Darstellung;
Figur 2 zeigt ein Ausführungsbeispiel einer Anordnung paralleler Zweige für eine erfindungsgemäße Stromrichteranordnung in einer schematischen Darstellung;
Figur 3 zeigt ein erstes Zeigerdiagramm für Zweigstrom und Zweigspannung eines Schaltmodulzweiges in einer schematischen Darstellung;
Figur 4 zeigt ein zweites Zeigerdiagramm für Zweigstrom und Zweigspannung eines Schaltmodulzweiges in einer schematischen Darstellung.

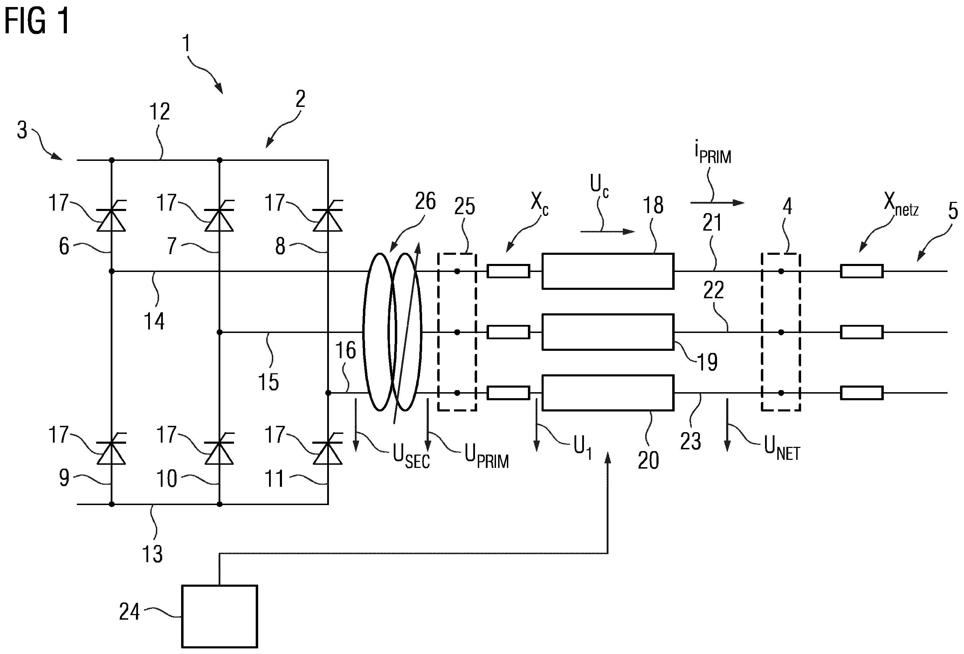

In Figur 1 ist eine Stromrichteranordnung 1 dargestellt, die an einem Netzanschlusspunkt 4 an ein dreiphasiges Wechselspannungsnetz 5 angeschlossen ist. Die Stromrichteranordnung 1 umfasst einen netzgeführten Stromrichter 2. Der Stromrichter 2 weist eine Gleichspannungsseite auf, die mit einem Gleichspannungsnetz bzw. Gleichspannungsleitung 3 verbunden ist. Wechselspannungsseitig des Stromrichters 2 ist ein steuerbarer, einen Stufenschalter umfassender Transformator 26 angeordnet. Der Stromrichter 2 umfasst sechs Stromrichterarme bzw. Stromrichterventile 6-11, die sich jeweils zwischen einem der Gleichspannungspole 12 oder 13 des Stromrichters 2 und einem der drei Wechselspannungsanschlüsse 14-16 erstrecken. In jedem der Stromrichterarme 6-11 ist eine Reihenschaltung von Thyristoren 17 angeordnet. Der Stromrichter 2 ist mittels der Wechselspannungsanschlüsse 14-16 über drei Phasenleitungen 21-23 mit dem Wechselspannungsnetz 5 verbunden.

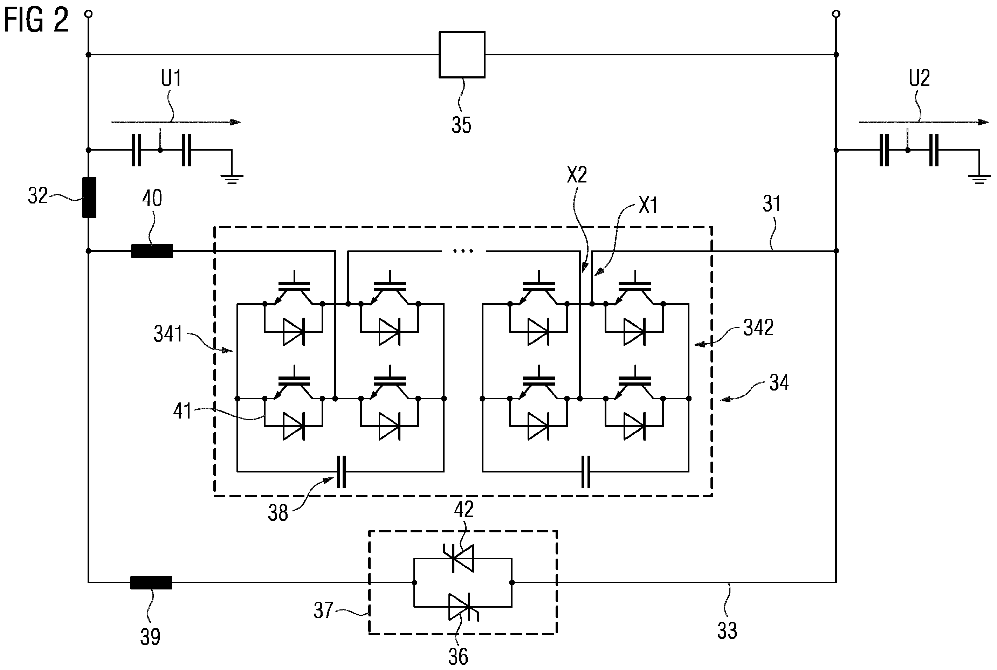

Die Stromrichteranordnung 1 umfasst ferner einen ersten Schaltmodulzweig in einer ersten Anordnung paralleler Zweige 18, einen zweiten Schaltmodulzweig in einer zweiten Anordnung paralleler Zweige 19 sowie einen dritten Schaltmodulzweig in einer dritten Anordnung paralleler Zweige 20. Die erste Zweiganordnung 18 ist in eine erste Phasenleitung 21, die zweite Zweiganordnung 19 in eine zweite Phasenleitung 22 und die dritte Zweiganordnung 20 in eine dritte Phasenleitung 23 seriell eingefügt. Die drei Phasenleitungen 21-23 erstrecken sich zwischen einem Anbindungspunkt 25 zum Transformator 26 und dem Netzanschlusspunkt 4. In dem in Figur 1 dargestellten Beispiel sind die drei Zweiganordnungen 18-20 gleichartig aufgebaut, was jedoch im Allgemeinen nicht der Fall sein muss. Auf den Aufbau der Anordnungen paralleler Zweige 18-20 beziehungsweise den Aufbau der Schaltmodulzweige wird in der nachfolgenden Figur 2 näher eingegangen.

Eine an den Schaltzweigen abfallende Spannung wird als Uc bezeichnet. Die stromrichterseitige Leitung-Erde-Spannung wird als U1, die netzseitige Leitung-Erde-Spannung entsprechend als Unet bezeichnet. Die Zweige 18-20 werden dazu eingesetzt, eine Netzimpedanz Xnetz und/oder eine konverterseitige Impedanz Xc zu kompensieren und eine Anbindungsspannung Uprim am Anbindungspunkt 25 zu stabilisieren, um einen stabilen und zuverlässigen Betrieb der Stromrichteranordnung 1 und insbesondere des Stromrichters 2 zu gewährleisten. Die Stromrichteranordnung 1 verfügt hierzu über eine zentrale Ansteuereinheit 24, die dazu eingerichtet ist, die Ansteuerung die Schaltmodulzweige zu regeln bzw. die Ansteuerung der dort eingesetzten Halbleiterschalter zu veranlassen. Mittels des steuerbaren Transformators 26 wird die Anbindungsspannung Uprim derart in eine Ausgangsspannung Usec transformiert, dass ihre Amplitude reduziert wird.

In Figur 2 ist eine Anordnung paralleler Zweige die als eines oder mehrere der Zweige 18-20 in der Stromrichteranordnung der Figur 1 einsetzbar ist. In eine Parallelschaltung zu einem Schaltmodulzweig 31 ist ein Überbrückungszweig 33 angeordnet und in einer weiteren Parallelschaltung ein Bypassschalter 35. Der Schaltmodulzweig 31 umfasst eine Reihenschaltung 34 von Schaltmodulen 341, 342, die aus dem Stand der Technik bekannten Vollbrückenschaltmodule sind (figürlich sind lediglich zwei Schaltmodule 341, 342 dargestellt, deren Anzahl kann jedoch grundsätzlich beliebig und an die jeweilige Anwendung angepasst sein). Jedes Vollbrückenschaltmodul umfasst einen eigenen Energiespeicher 38 in Form eines Speicherkondensators sowie ein- und ausschaltbare Halbleiterschalter 41 in Form von (bsp.) IGBTs. Jedem IGBT ist dabei eine Freilaufdiode antiparallel geschaltet. An den Anschlussklemmen eines jeden Vollbrückenschaltmoduls können bipolare Spannungen erzeugt werden. In dem Schaltmodulzweig 31 ist ferner eine erste Induktivität 40 angeordnet.

Der Überbrückungszweig 33 umfasst eine Schaltvorrichtung 37. Die Schaltvorrichtung 37 weist einen ersten einschaltbaren Halbleiterschalter 36 in Form eines Thyristors sowie einen zweiten einschaltbaren Halbleiterschalter 42, ebenfalls in Form eines Thyristors, auf. Die Durchlassrichtungen der beiden Halbleiterschalter 36 und 42 sind entgegengesetzt. In diesem Sinne sind die Halbleiterschalter 36 und 42 antiparallel geschaltet. Der Überbrückungszweig 33 umfasst ferner eine zweite Induktivität 39. Eine weitere Induktivität der Anordnung ist mit dem Bezugszeichen 32 gekennzeichnet. Die Differenz der Spannungen U1 und U2 entspricht der am Schaltmodulzweig anstehenden Zweigspannung.

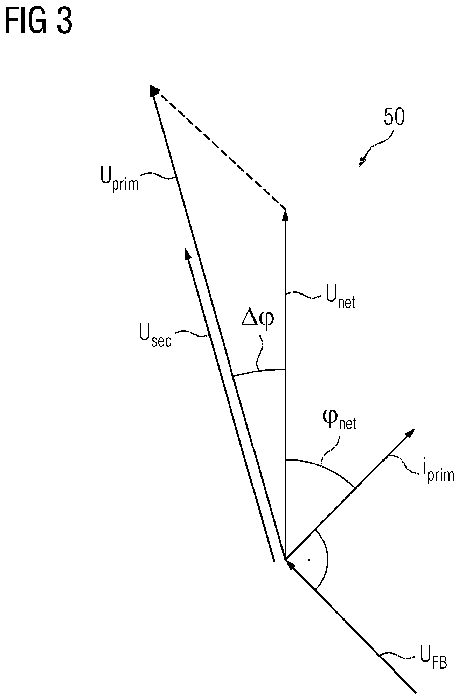

In Figur 3 ist ein Zeigerdiagramm 50 dargestellt. Das Zeigerdiagramm 50 ist ein Spannungs-Strom-Diagramm für den Falle eines Gleichrichterbetriebes einer Stromrichteranordnung, die beispielsweise der Stromrichteranordnung 1 der Figur 1 entspricht. In dem Diagramm 50 sind eine primärseitige Spannung Uprim auf einer Primärseite eines steuerbaren Transformators, beispielsweise des Transformators 26 der Figur 1, sowie eine sekundärseitige Spannung Usec auf einer Sekundärseite des Transformators dargestellt. Die primärseitige Spannung Uprim entspricht dabei der Anbindungsspannung an dem Anbindungspunkt zwischen den Schaltmodulzweigen und dem Transformator. Es ist erkennbar, dass eine an den Schaltmodulzweigen gestellte Zweigspannung UFB gegenüber einem primärseitigen Strom iprim auf der Primärseite des Transformators um pi/2 phasenverschoben ist. Zugleich ist der primärseitige Strom iprim um einen Winkel phinet gegenüber einer Netzspannung Unet eines an die Stromrichteranordnung angeschlossenen Wechselspannungsnetzes verschoben. Es ist ferner erkennbar, dass die primärseitige Spannung Uprim sich aus der Netzspannung Unet und der Zweigspannung UFB zusammensetzt. Die sekundärseitige Spannung Usec ist phasengleich zur primärseitigen Spannung Uprim, jedoch mit (mittels des Transformators) reduzierter Amplitude. Das Zeigerdiagramm 50 verdeutlicht zudem, dass für die Regelung der Zweigspannung UFB das Bezugssystem des Zweigstromes iprim gewählt wird. Dabei entspricht der Zweigstrom iprim durch den bzw. die Schaltmodulzweige einem Netzstrom inet. In dem in Figur 3 dargestellten Fall geht die Netzspannung Unet der primärseitigen Spannung Uprim um einen Winkel deltaphi voran.

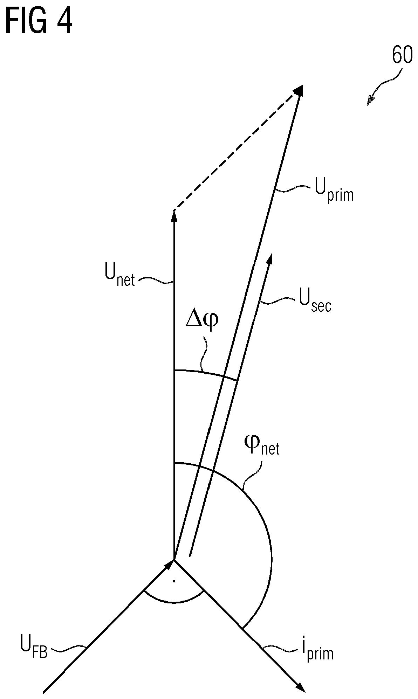

In Figur 4 ist ein Zeigerdiagramm 60 dargestellt. Das Zeigerdiagramm 60 ist ein Spannungs-Strom-Diagramm für den Falle eines Wechselrichterbetriebes einer Stromrichteranordnung, die beispielsweise der Stromrichteranordnung 1 der Figur 1 entspricht. In dem Diagramm 60 sind eine primärseitige Spannung Uprim auf einer Primärseite eines steuerbaren Transformators, beispielsweise des Transformators 26 der Figur 1, sowie eine sekundärseitige Spannung Usec auf einer Sekundärseite des Transformators dargestellt. Die primärseitige Spannung Uprim entspricht dabei der Anbindungsspannung an dem Anbindungspunkt zwischen den Schaltmodulzweigen und dem Transformator. Es ist erkennbar, dass eine an den Schaltmodulzweigen gestellte Zweigspannung UFB gegenüber einem primärseitigen Strom iprim auf der Primärseite des Transformators um pi/2 phasenverschoben ist. Zugleich ist der primärseitige Strom iprim um einen Winkel phinet gegenüber einer Netzspannung Unet eines an die Stromrichteranordnung angeschlossenen Wechselspannungsnetzes verschoben. Es ist ferner erkennbar, dass die primärseitige Spannung Uprim sich aus der Netzspannung Unet und der Zweigspannung UFB zusammensetzt. Die sekundärseitige Spannung Usec ist phasengleich zur primärseitigen Spannung Uprim, jedoch mit (mittels des Transformators) reduzierter Amplitude. Das Zeigerdiagramm 50 verdeutlicht zudem, dass für die Regelung der Zweigspannung UFB das Bezugssystem des Zweigstromes iprim gewählt wird. Dabei entspricht der Zweigstrom iprim durch den bzw. die Schaltmodulzweige einem Netzstrom inet. In dem in Figur 4 dargestellten Fall folgt die Netzspannung Unet der primärseitigen Spannung Uprim um einen Winkel deltaphi nach.

## Patentansprüche

1. Stromrichteranordnung (1), die einen netzgeführten Stromrichter (2) umfasst, der einen Wechselspannungsanschluss (14 - 16) aufweist, der über wenigstens eine Phasenleitung (21 - 23) mit einem Wechselspannungsnetz (5) verbindbar ist, wobei die Stromrichteranordnung (1) ferner wenigstens einen Schaltmodulzweig (31) umfasst, der seriell in der wenigstens einen Phasenleitung (21 - 23) angeordnet ist, und der eine Reihenschaltung von Schaltmodulen (341, 342) umfasst, die jeweils einen Energiespeicher umfassen und an deren Anschlüssen (X1, X2) jeweils bipolare Spannungen erzeugbar sind, die sich zu einer Zweigspannung (Ue) summieren, wobei
in einer Parallelschaltung zum Schaltmodulzweig (31) ein Überbrückungszweig (33) angeordnet ist, in dem wenigstens eine Schaltvorrichtung (37) angeordnet ist, wobei die Schaltvorrichtung (37) antiparallel geschaltete einschaltbare Halbleiterschalter (36, 42) umfasst, wobei die Stromrichteranordnung dazu eingerichtet ist, zwecks Startens der Stromrichteranordnung (1)
- die Schaltmodule im Schaltzweig zu sperren;
- die Halbleiterschalter im Überbrückungszweig mit einer vorbestimmten Verzögerung einzuschalten, und
- durch verzögertes Einschalten der Halbleiterschalter nach dem Stromnulldurchgang des Zweigstroms den Zweigstrom vom Schaltzweig auf den Überbrückungszweig zu kommutieren, wobei eine Verzögerungszeit in Abhängigkeit einer Stromhöhe gewählt wird, wobei die Verzögerungszeit umso kleiner gewählt wird, je höher der Strom ist,
wobei die Stromrichteranordnung ferner dazu eingerichtet ist, die Schaltmodule in Abhängigkeit von einer Schaltmodulspannung und einer Stromrichtung des Zweigstromes zu schalten, so dass die Energiespeicher der Schaltmodule bis zu einem vorgegebenen Spannungsniveau geladen werden.

2. Stromrichteranordnung (1) nach Anspruch 1,
wobei der Stromrichter (2) einen n-phasigen Wechselspannungsanschluss (14 - 16) aufweist, der über n Phasenleitungen (21 - 23) mit dem Wechselspannungsnetz verbindbar ist, wobei in jeder Phasenleitung seriell ein Schaltmodulzweig (31) angeordnet ist, wobei in jedem Schaltmodulzweig (31) eine Reihenschaltung der Schaltmodule (341, 342) angeordnet ist und parallel zu jedem der Schaltmodulzweige jeweils ein Überbrückungszweig (33) mit je einer Schaltvorrichtung mit antiparallelen einschaltbaren Halbleiterschaltern (36, 42) angeordnet ist.

3. Stromrichteranordnung (1) nach einem der vorangehenden Ansprüche,
wobei die Schaltmodule (341, 342) Vollbrückenschaltmodule sind.

4. Stromrichteranordnung (1) nach einem der vorangehenden Ansprüche,
wobei der netzgeführte Stromrichter (2) ein thyristorbasierter Stromrichter ist.

5. Stromrichteranordnung (1) nach einem der vorangehenden Ansprüche,
wobei in einer Parallelschaltung zum Schaltmodulzweig (31) und zum Überbrückungszweig (33) ein mechanischer Bypassschalter (35) angeordnet ist.

6. Stromrichteranordnung (1) nach einem der vorangehenden Ansprüche,
wobei im Schaltmodulzweig (31) eine erste Induktivität (40) angeordnet ist.

7. Stromrichteranordnung (1) nach einem der vorangehenden Ansprüche,
wobei im Überbrückungszweig (33) eine zweite Induktivität (39) angeordnet ist.

8. Stromrichteranordnung (1) nach einem der vorangehenden Ansprüche, wobei für die Anzahl Ah der antiparallelen Halbleiterschalter (36, 42) im Überbrückungszweig (33) gilt, dass Ah <= As <= 3 * Ah, wobei As die Anzahl der Schaltmodule im zugeordneten Schaltmodulzweig bezeichnet.

9. Stromrichteranordnung (1) nach einem der vorangehenden Ansprüche,
wobei die Stromrichteranordnung (1) eine zentrale Ansteuereinheit umfasst, die dazu eingerichtet ist, bei Vorliegen einer vorbestimmten Bedingung die Halbleiterschalter im Überbrückungszweig (33) einzuschalten.

10. Stromrichteranordnung (1) nach einem der vorangehenden Ansprüche 1 bis 9,
wobei die Halbleiterschalter (36, 42) im Überbrückungszweig (33) zu einem automatischen Einschalten bei Vorliegen einer vorbestimmten Bedingung eingerichtet sind.

11. Stromrichteranordnung (1) nach einem der vorangehenden Ansprüche,
wobei die Stromrichteranordnung (1) ferner einen steuerbaren Transformator (26) umfasst, der zwischen dem wenigstens einen Schaltmodulzweig (31) und dem Stromrichter (2) angeordnet ist.

12. Verfahren zum Starten der Stromrichteranordnung (1) nach einem der vorangehenden Ansprüche, bei dem
- die Schaltmodule im Schaltzweig gesperrt werden;
- die Halbleiterschalter im Überbrückungszweig mit einer vorbestimmten Verzögerung eingeschaltet werden, und
- durch verzögertes Einschalten der Halbleiterschalter nach dem Stromnulldurchgang des Zweigstroms der Zweigstrom vom Schaltzweig auf den Überbrückungszweig kommutiert wird, wobei eine Verzögerungszeit in Abhängigkeit einer Stromhöhe gewählt wird, wobei die Verzögerungszeit umso kleiner gewählt wird, je höher der Strom ist,
wobei die Schaltmodule in Abhängigkeit von einer Schaltmodulspannung und einer Stromrichtung des Zweigstromes geschaltet werden, so dass die Energiespeicher der Schaltmodule bis zu einem vorgegebenen Spannungsniveau geladen werden.

13. Verfahren nach Anspruch 12,
wobei mit dem Einschalten der Halbleiterschalter (36, 42) im Überbrückungszweig (33) ein in Parallelschaltung zum Überbrückungszweig (33) angeordneter mechanischer Bypassschalter (35) geöffnet wird, so dass der Zweigstrom auf den Überbrückungszweig (33) kommutiert wird.

## Claims

1. Converter arrangement (1) that comprises a line-commutated converter (2) that has an AC voltage terminal (14 - 16) that is able to be connected to an AC voltage grid (5) via at least one phase line (21 - 23), wherein the converter arrangement (1) furthermore comprises at least one switching module branch (31) that is arranged in series in the at least one phase line (21 - 23) and that comprises a series connection of switching modules (341, 342) that each comprise an energy storage unit and at whose terminals (X1, X2) bipolar voltages that sum to give a branch voltage (Ue) are in each case able to be generated, wherein
a bypass branch (33) is arranged in a parallel connection to the switching module branch (31), at least one switching device (37) being arranged in the bypass branch, wherein the switching device (37) comprises activatable semiconductor switches (36, 42) that are connected in antiparallel, wherein the converter arrangement is designed, for the purpose of starting the converter arrangement (1):
- to block the switching modules in the switching branch;
- to activate the semiconductor switches in the bypass branch with a predetermined delay, and
- to commutate the branch current from the switching branch to the bypass branch through delayed activation of the semiconductor switches following the current zero crossing of the branch current, wherein a delay time is selected on the basis of a current value, wherein the delay time is selected to be smaller the higher the current,
wherein the converter arrangement is furthermore designed to switch the switching modules on the basis of a switching module voltage and a current direction of the branch current, such that the energy storage units of the switching modules are charged to a predefined voltage level.

2. Converter arrangement (1) according to Claim 1,
wherein the converter (2) has an n-phase AC voltage terminal (14 - 16) that is able to be connected to the AC voltage grid via n phase lines (21 - 23), wherein a switching module branch (31) is arranged in series in each phase line, wherein a series connection of the switching modules (341, 342) is arranged in each switching module branch (31) and a respective bypass branch (33) having a respective switching device having semiconductor switches (36, 42) able to be activated in antiparallel is arranged in parallel with each of the switching module branches.

3. Converter arrangement (1) according to either of the preceding claims,
wherein the switching modules (341, 342) are full-bridge switching modules.

4. Converter arrangement (1) according to one of the preceding claims,
wherein the line-commutated converter (2) is a thyristor-based converter.

5. Converter arrangement (1) according to one of the preceding claims,
wherein a mechanical bypass switch (35) is arranged in a parallel connection to the switching module branch (31) and to the bypass branch (33).

6. Converter arrangement (1) according to one of the preceding claims,
wherein a first inductance (40) is arranged in the switching module branch (31).

7. Converter arrangement (1) according to one of the preceding claims,
wherein a second inductance (39) is arranged in the bypass branch (33).

8. Converter arrangement (1) according to one of the preceding claims, wherein, for the number Ah of antiparallel semiconductor switches (36, 42) in the bypass branch (33), it is the case that Ah <= As <= 3 * Ah, wherein As denotes the number of switching modules in the associated switching module branch.

9. Converter arrangement (1) according to one of the preceding claims,
wherein the converter arrangement (1) comprises a central actuation unit that is designed to activate the semiconductor switches in the bypass branch (33) when a predetermined condition is present.

10. Converter arrangement (1) according to one of preceding Claims 1 to 9,
wherein the semiconductor switches (36, 42) in the bypass branch (33) are designed to be activated automatically when a predetermined condition is present.

11. Converter arrangement (1) according to one of the preceding claims,
wherein the converter arrangement (1) furthermore comprises a controllable transformer (26) that is arranged between the at least one switching module branch (31) and the converter (2).

12. Method for starting the converter arrangement (1) according to one of the preceding claims, in which
- the switching modules in the switching branch are blocked;
- the semiconductor switches in the bypass branch are activated with a predetermined delay, and
- the branch current is commutated from the switching branch to the bypass branch through delayed activation of the semiconductor switches following the current zero crossing of the branch current, wherein a delay time is selected on the basis of a current value, wherein the delay time is selected to be smaller the higher the current,
wherein the switching modules are switched on the basis of a switching module voltage and a current direction of the branch current, such that the energy storage units of the switching modules are charged to a predefined voltage level.

13. Method according to Claim 12,
wherein, when the semiconductor switches (36, 42) in the bypass branch (33) are activated, a mechanical bypass switch (35) arranged in the parallel connection to the bypass branch (33) is opened, such that the branch current is commutated to the bypass branch (33).

## Revendications

1. Agencement (1) de convertisseur, qui comprend un convertisseur (2), qui est commandé par le réseau et qui a une borne (14-16) de tension alternative, laquelle peut être connectée à un réseau (5) à tension alternative par au moins une ligne (21-23) de phase, dans lequel l'agencement (1) de convertisseur comprend en outre au moins une branche (31) de module de coupure, qui est montée en série dans la au moins une ligne (21-23) de phase et qui comprend un montage en série de modules (341, 342) de coupure, qui comprennent chacun un accumulateur d'énergie et à leurs bornes (X1, X2) peuvent être produites respectivement des tensions bipolaires, qui se somment en une tension (Ue) de branche, dans lequel
dans un montage en parallèle à la branche (31) de module de coupure, est montée une branche (33) de shuntage, dans laquelle est monté au moins un dispositif (37) de coupure, dans lequel le dispositif (37) de coupure comprend des interrupteurs (36, 42) à semiconducteur pouvant être fermés montés tête-bêche, dans lequel l'agencement de convertisseur est agencé pour, en vue de faire démarrer l'agencement (1) de convertisseur,
- bloquer les modules de coupure dans la branche de coupure ;
- fermer les interrupteurs à semiconducteur dans la branche de shuntage avec un retard déterminé à l'avance, et
- par la fermeture retardée des interrupteurs à semiconducteur après le passage par zéro du courant de branche, commuter le courant de branche de la branche de coupure à la branche de shuntage, dans lequel il est choisi un temps de retard en fonction d'un niveau du courant, dans lequel le temps de retard est choisi d'autant plus petit que le niveau du courant est plus haut,
dans lequel l'agencement de convertisseur est agencé en outre pour monter les modules de coupure en fonction d'une tension de module de coupure et d'un sens du courant de branche, de manière à charger les accumulateurs d'énergie des modules de coupure jusqu'à un niveau de tension donné à l'avance.

2. Agencement (1) de convertisseur suivant la revendication 1,
dans lequel le convertisseur (2) a une borne (14-16) de tension alternative à n phase, qui peut être connectée au réseau à tension alternative par n lignes (21-23) de phase, dans lequel dans chaque ligne de phase est montée en série une branche (31) de module de coupure, dans lequel dans chaque branche (31) de module de coupure est monté un montage en série des modules (341, 342) de coupure et en parallèle avec chaque branche de module de coupure est montée respectivement une branche (33) de shuntage ayant respectivement une installation de coupure à interrupteurs (36, 42) à semiconducteur pouvant être fermée tête-bêche.

3. Agencement (1) de convertisseur suivant l'une des revendications précédentes,
dans lequel les modules (341, 342) de coupure sont des modules de coupure à pont complet.

4. Agencement (1) de convertisseur suivant l'une des revendications précédentes,
dans lequel le convertisseur (2) commandé par le réseau est un convertisseur à base de thyristor.

5. Agencement (1) de convertisseur suivant l'une des revendications précédentes,
dans lequel un interrupteur (35) mécanique de dérivation est monté dans un montage en parallèle avec la branche (31) de module de coupure et la branche (33) de shuntage.

6. Agencement (1) de convertisseur suivant l'une des revendications précédentes,
dans lequel une première inductance (40) est montée dans la branche (31) de module de coupure.

7. Agencement (1) de convertisseur suivant l'une des revendications précédentes,
dans lequel une deuxième inductance (39) est montée dans la branche (33) de shuntage.

8. Agencement (1) de convertisseur suivant l'une des revendications précédentes, dans lequel, pour le nombre Ah des interrupteurs (36, 42) à semiconducteur tête-bêche dans la branche (33) de shuntage, on a Ah <= As <= 3 * Ah, As désignant le nombre des modules de coupure dans la branche de module de coupure associée.

9. Agencement (1) de convertisseur suivant l'une des revendications précédentes,
dans lequel l'agencement (1) de convertisseur comprend une unité centrale de commande, qui est agencée pour, en présence d'une condition déterminée à l'avance, fermer les interrupteurs à semiconducteur dans la branche (33) de shuntage.

10. Agencement (1) de convertisseur suivant l'une des revendications 1 à 9 précédentes,
dans lequel les interrupteurs (36, 42) à semiconducteur dans la branche (33) de shuntage sont agencés pour une fermeture automatique en présence d'une condition déterminée à l'avance.

11. Agencement (1) de convertisseur suivant l'une des revendications précédentes,
dans lequel l'agencement (1) de convertisseur comprend en outre un transformateur (26), qui peut être commandé et qui est monté entre la au moins une branche (31) de module de coupure et le convertisseur (2).

12. Procédé pour faire démarrer l'agencement (1) de convertisseur suivant l'une des revendications précédentes, dans lequel
- on bloque les modules de coupure dans la branche de coupure ;
- on ferme les interrupteurs à semiconducteur de la branche de shuntage avec un retard déterminé à l'avance, et
- par la fermeture retardée des interrupteurs à semiconducteur après le passage par zéro du courant dans la branche, on commute de la branche de coupure à la branche de shuntage, dans lequel on sélectionne un temps de retard, en fonction d'un niveau du courant, dans lequel le temps de retard est choisi d'autant plus petit que le niveau du courant est plus haut,
dans lequel on commute les modules de coupure en fonction d'une tension de module de coupure et d'un sens du courant de branche, de manière à charger les accumulateurs d'énergie des modules de coupure jusqu'à un niveau de tension donné à l'avance.

13. Procédé suivant la revendication 12,
dans lequel avec la fermeture des interrupteurs (36, 42) à semiconducteur dans la branche (33) de shuntage, on ouvre un interrupteur (35) mécanique de dérivation monté dans un montage en parallèle avec la branche (33) de shuntage, de manière à commuter le courant de branche à la branche (33) de shuntage.
